# EUROPÄISCHE PATENTSCHRIFT

(11) **EP 2 986 773 B1**
(45) Veröffentlichungstag und Bekanntmachung des Hinweises auf die Patenterteilung: **27.02.2019**
(21) Anmeldenummer: 14722546.0
(22) Anmeldetag: 22.04.2014
(51) Int. Cl.: D06P 3/52, B32B 5/22, B32B 5/24, C09D 11/00, D06P 3/54, D06M 10/02, D06M 16/00, D06P 5/30, D06M 101/32, B32B 5/26

(54) **VERFAHREN ZUM HERSTELLEN VON BEDRUCKTEN TEXTILIEN FÜR KRAFTFAHRZEUGE**
METHOD FOR PRODUCING PRINTED TEXTILES FOR MOTOR VEHICLES
PROCÉDÉ DE FABRICATION DE TEXTILES IMPRIMÉS POUR VÉHICULES AUTOMOBILES

(30) Priorität: 19.04.2013 DE 102013006763
(43) Veröffentlichungstag der Anmeldung: 24.02.2016
(73) Patentinhaber: Adient Luxembourg Holding S.à r.l., 1855 Luxembourg (LU)
(72) Erfinder: CASTAGNA, Francesco, 7021 Havre (BE); XIROMERITIS, Nick, 51063 Köln (DE); RIHA, Miroslav, 38601 Strakonice (CZ); REINBACH, Ingo, 52249 Eschweiler (DE); MÜLLER, Peter Gerd, 50667 Köln (DE)
(74) Vertreter: Siekmann, Gunnar
(86) Internationale Anmeldenummer: PCT/EP2014/001067
(87) Internationale Veröffentlichungsnummer: WO 2014/170033

(56) Entgegenhaltungen:
- EP-A1- 0 965 681
- EP-A1- 1 400 575
- US-A1- 2011 032 304

## Beschreibung

Die Erfindung betrifft ein Verfahren zum Herstellen von bedruckten Textilien für Kraftfahrzeuge, wobei die Textilien aus einer polyesterbasierten Oberware und einer Unterware bestehen und bei dem in die Oberware in einem Foulard-Prozess mindestens ein Verdicker und ein UV-Absorber eingebracht werden, die Oberware getrocknet wird, auf der getrockneten Oberware der digitale Druckprozess durchgeführt wird und die bedruckte Oberware mit der Unterware laminiert wird. Derartige Verfahren sind im Stand der Technik bekannt.

Die EP 2 281 940 A1 beschreibt beispielsweise ein Druckverfahren auf einem waschbaren Stoff. Die EP 0 965 681 A1 beschreibt die Herstellung eines bedruckten Polyestermaterials, bei dem das Polyestermaterial mit verschiedenen Hilfsstoffen, wie auch UV-Absorptionsmitteln und Verdickern vorbehandelt wird.

Aus der EP 1 400 575 A1 ist eine Tintenzusammensetzung bekannt, die für eine einheitlich glänzende Erscheinung und eine Fleckunempfindlichkeit für Fotos ausgelegt ist. Dazu werden Tinten verwendet, die auch farblose Tinten enthalten können. Aus der US 2011/0032304 A1 ist eine Tintenzusammensetzung bekannt, mit der abriebfeste Drucke für unterschiedlichste Materialien erreicht werden. Die Tinte kann dabei aus vier verschiedenen Komponenten zusammengesetzt werden.

Der Erfindung liegt die Aufgabe zugrunde, ein Verfahren zum Herstellen von bedruckten Textilien der eingangs genannten Art zu verbessern, so dass die Textilien und die darauf aufgedruckten Farben besonders abriebfest sind.
Dies wird mit einem Verfahren mit den Merkmalen des Patentanspruches 1 erreicht. Vorteilhafte Ausgestaltungen der Erfindung sind in den Unteransprüchen beschrieben.
Bei einem Verfahren zum Herstellen von bedruckten Textilien für Kraftfahrzeuge, wobei die Textilien aus einer polyesterbasierten Oberware und einer Unterware bestehen und bei dem in die Oberware in einem Foulard-Prozess mindestens ein Verdicker und ein UV-Absorber eingebracht werden, die Oberware getrocknet wird, auf der getrockneten Oberware der digitale Druckprozess durchgeführt wird und die bedruckte Oberware mit der Unterware laminiert wird, ist erfindungswesentlich vorgesehen, dass im Druckprozess bei Zugabe der Tinte farblose Tinte auf die Oberware gegeben wird. Die farblose Tinte, auch als "Blind-Ink" bezeichnet, wird gleichzeitig mit der farbigen Tinte mit einem separaten Druckkopf aufgebracht. Dadurch ist das Eindringen der farbigen Tinte durch "Gravitation" erhöht.
Die farblose Tinte weist bevorzugt die gleiche oder zumindest eine sehr ähnliche Viskosität wie die farbige Tinte auf. Die farblose Tinte weist auch Pigmente, jedoch farblose Pigmente auf. Die farblose Tinte wird insbesondere im Zusammenhang mit hellen Farben verwendet. In einer anderen bevorzugten Ausgestaltung wird für einige helle Farbtöne mindestens dieselbe Menge farbloser Tinte wie farbiger Tinte aufgebracht. Bevorzugt wird mehr als zweimal oder mehr als dreimal soviel farblose Tinte wie farbige Tinte aufgebracht. Über alle Farben hinweg beträgt der Anteil farbloser Tinte gegenüber farbigen Tinten bevorzugt mindestens 20 % und höchstens 50 %, insbesondere 30 % bis 40 %.

Bevorzugt wird in den Foulard-Prozess ein Hydrophilierungsmittel in die Oberware eingebracht. Die Oberware, die im Wesentlichen aus Polyester besteht, bzw. bevorzugt vollständig aus Polyester besteht, soll dadurch hydrophil, also wasseranziehend ausgestaltet werden. Dadurch wird die Aufnahme der Farben oder Tinten im späteren Druckprozess verbessert. Bevorzugt wird dazu eine Dispersion aus hydrophilen Polymeren mit funktionalen Polysiloxanen eingesetzt. Ein Produkt, das diesen Effekt bewirkt, ist beispielsweise das Produkt ULTRAPHIL der Firma Huntsman.

In einer anderen bevorzugten Ausgestaltung wird vor Durchführung des Druckprozesses eine Corona- oder Plasmabehandlung durchgeführt. Die Oberfläche der Oberware wird dabei entweder mit dem Corona-Verfahren vorbehandelt, das als physikalische Vorbehandlung mittels Hochspannung betrachtet wird. Bei der Plasmabehandlung wird bevorzugt ein Atmosphärendruckplasma eingesetzt. Es wird als ein stark ionisiertes Gas erzeugt und auf die Oberfläche der Oberware angewandt. Dadurch wird die Oberfläche aktiviert. Im Ergebnis führt dies zu einer besseren Haftung der später aufgebrachten Farben. Die Oberflächenspannung wird abgebaut. Im Ergebnis wird eine bessere Benetzbarkeit der Oberware und eine höhere Eindringtiefe der Tinten erreicht. Auch die Abriebfestigkeit der aufgebrachten Tinten und/oder Farben wird erhöht. Die Corona- oder Plasmabehandlung wird bevorzugt vor Durchführung des Foulard-Prozesses durchgeführt.

Bei einer weiteren bevorzugten Weiterbildung der Erfindung wird vor Durchführung des Foulard-Prozesses die Oberware einer Enzymbehandlung unterzogen. Eine solche Enzymbehandlung wird bevorzugt vor Durchführung des Foulard-Prozesses durchgeführt. Hier ist beispielsweise der Einsatz des Produkts TEXAZYM PES der Firma INOTEX spol. s.r.o. aus der Tschechischen Republik möglich.

Das Verfahren und die Weiterbildungen können in Kombination miteinander durchgeführt werden. Insbesondere ist die Kombination der Corona- oder Plasmabehandlung der Oberware und die Verwendung der farblosen Tinte beim Druckverfahren in Kombination miteinander bevorzugt. Ergänzend ist auch die Kombination der Enzymbehandlung mit den farblosen Tinten möglich. Ebenso ist die Kombination aus der Enzymbehandlung und der Corona- oder Plasmabehandlung eine Option zur Verbesserung des Druckergebnisses, insbesondere im Hinblick auf die Abriebfestigkeit.

Die verwendete Oberware besteht bevorzugt entweder vollständig aus Polyester oder aus Polyester mit natürlichen Garnen oder künstlichen Garnen. Die Oberware ist dabei für automobile Inneneinrichtungsprodukte vorgesehen. Die Textilien weisen eine Oberware und eine Unterware auf, wobei die Unterware typischerweise mit einem Schaum oder Schaumstoff versehen ist.

Bevorzugt wird in dem Foulard-Prozess auch ein Entlüftungsmittel in die Oberware eingebracht. Das Entlüftungsmittel kann beispielsweise Alkohol enthalten, insbesondere auf Alkohol basiert sein. Weiterhin wird bevorzugt auch ein Benetzungsmittel eingebracht. Bevorzugt kann es sich auch um eine Mischung aus aliphatischen Kohlenwasserstoffen und Alkoholen handeln. Geeignet ist hier beispielsweise das Produkt LYOPRINT AIR der Firma Huntsman Advanced Materials LLC, USA. In dem Foulard-Prozess wird bevorzugt auch das Verdickungsmittel gleichzeitig eingebracht. Dieses verhindert später das Verlaufen der Tinte. Dies kann zum Beispiel ein Polyacrylat, ein Guar oder ein Alginat sein. In diesem wird ein Verlaufen der Tinte verhindert. Der UV-Absorber ist beispielsweise ein Triazin, insbesondere eine O-hydroxyphenyl-Triazine-Zusammensetzung. Als Produkte kommen hier beispielsweise THERMACOL MP von der Firma Huntsman für den Verdicker und UV-Fast P von der Firma Huntsman als UV-Absorber in Frage.

In einer anderen bevorzugten Ausgestaltung der Erfindung wird das Druckverfahren mit Dispersionsfarben durchgeführt und unmittelbar anschließend erfolgt eine Trocknung. Diese erfolgt dabei bevorzugt in einer Aufspannung der Oberware. Die Trocknung wird bevorzugt mit heißer Luft durchgeführt. Im Rahmen der Aufbringung der Druckfarben kann an dieser Stelle kurz vor Auftrag der Druckfarben die oben beschriebene Einbringung der farblosen Tinte (Blind Ink) erfolgen.

In einer anderen bevorzugten Ausgestaltung der Erfindung erfolgt nach dem Druckprozess ein Fixierschritt, bei dem die Tinte fixiert wird. Man spricht hier auch von einem Dämpfen oder bevorzugt von einem Dämpfprozess, wobei eine Behandlung mit Wasserdampf bei über 100 Grad Celsius, bevorzugt 180 Grad Celsius erfolgt. Die Oberware ist dabei bevorzugt auf einem Spannrahmen aufgespannt. Alternativ kann eine Trocknung auch in einem heißen Ofen ("hot flue") erfolgen. Alternativ kann dieser Schritt auch mit einer Kalanderanlage oder einem Maschinenglättwerk erfolgen.

Bevorzugt wird nach dem Druckprozess und dem Fixierschritt die Oberware noch in zwei weiteren Schritten gewaschen und getrocknet. Bei dem Waschvorgang wird bevorzugt Natronlauge und Hydrosulfit und ein Dispergator oder ein Waschmittel mit Tensiden eingesetzt. Mit den eingesetzten Waschmitteln werden das Verdickungsmittel und unfixierte Farbstoffe ausgewaschen. Dadurch verbessert sich das Abriebverhalten weiter. Im anschließenden Trocknungsschritt wird die Oberware getrocknet. Dies erfolgt bevorzugt auf einem Spannrahmen.

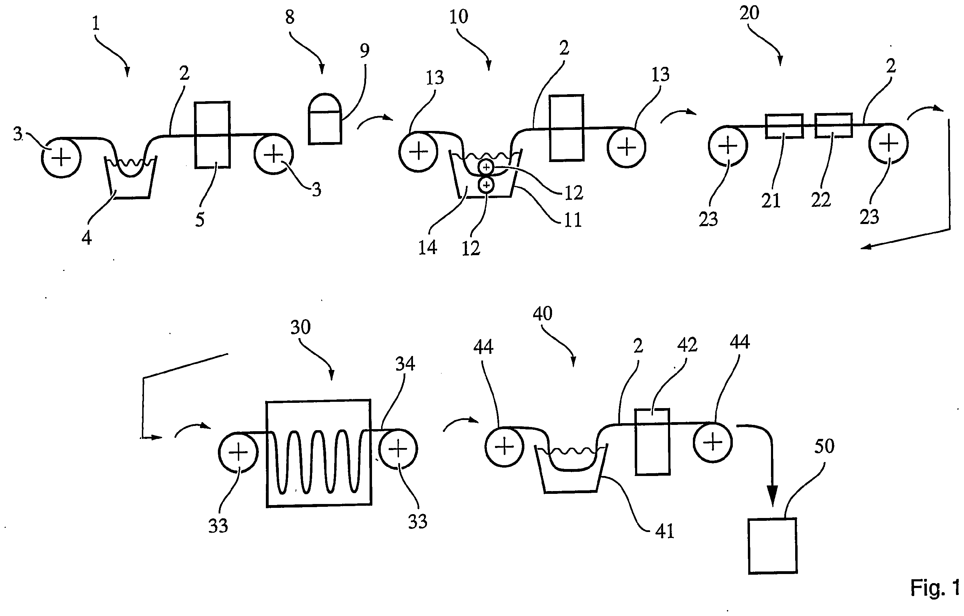

Nachfolgend wird das Verfahren unter Bezugnahme auf die einzige Figur der Zeichnung weiter erläutert.

Im Schritt 1 ist die Oberware 2 auf Rollen 3 aufgespannt und wird in einem Behälter 4 gewaschen und/oder gespült. In derselben Aufspannung auf den Rollen 3 erfolgt eine Trocknung auf einem Spannrahmen 5. Im Schritt 8, der hier nur als Block 9 dargestellt ist, erfolgt eine Corona- oder Plasmabehandlung, bei der die Oberfläche der Oberware 2 durch ionisiertes Gas oder durch Anlegen von Hochspannung behandelt wird, wodurch die Benetzbarkeit erhöht wird. Im nächsten Schritt 10 erfolgt der Foulard-Prozess, der auch als Klotzen oder Quetschen bezeichnet wird. Dabei wird die Oberware 2 in einem Behälter 11 zwischen Walzen 12 gequetscht. In dem Behälter 11 ist eine Flüssigkeit 14 mit Zuschlagsstoffen enthalten, die dadurch auf die Oberware 2 aufgebracht werden. Insbesondere sind in der Flüssigkeit 14 ein Verdickungsmittel, ein UV-Absorber und ein Entlüftungsmittel vorgesehen. Das Verdickungsmittel verhindert das Verlaufen der Tinte. Dies kann zum Beispiel Polyacrylat oder Guar sein. Man spricht hier auch von einem Dämpfen oder bevorzugt von einem Dämpfprozess. Der UV-Absorber verbessert die Langlebigkeit der Oberware 2 bei UV-Einstrahlung. Hier kann beispielsweise ein Produkt eingesetzt werden, das auf einer O-hydroxyphenyl-Triazine-Zusammensetzung basiert. Zusätzlich ist in der Flüssigkeit 14 auch ein Hydrophilierungsmittel enthalten, das im Schritt 10 in die Oberware 2 eingebracht wird. Dadurch wird die Oberware 2, die aus Polyester besteht, hydrophil und nimmt die später aufgebrachten Farbstoffe, insbesondere die Tinte, besser auf.

Im Schritt 8 kann alternativ oder als zusätzlicher eigenständiger Schritt auch eine Vorbehandlung der Oberware 2 mit Enzymen erfolgen. Bei der Behandlung mit Enzymen erfolgt dies bevorzugt in einem eigenständigen Prozess, beispielsweise in einer Färbemaschine oder auch durch eine Foulard-Behandlung. Im folgenden Schritt 20 erfolgt der eigentliche Druckprozess. Die Oberware 2 wird auf Rollen 23 aufgespannt und wird dabei im Schritt 21 digital bedruckt. Dabei wird erfindungsgemäß eine "Blind Ink", eine farblose Tinte, aufgebracht, um die Benetzung zu verbessern. Gleichzeitig erfolgt ebenfalls im Schritt 21 das eigentliche Bedrucken. Im Block 22 erfolgt eine Trocknung mit heißer Luft. Diese erfolgt unmittelbar anschließend in derselben Aufspannung der Oberware 2. Im Schritt 30 erfolgt ein Fixierschritt. Die Oberware 2 ist auf Rollen 33 aufgespannt und wird durch einen Dämpfer geführt. Die Oberware 2 wird hier mit Wasserdampf bei 180 Grad Celsius behandelt, so dass die Tinte dabei fixiert wird. Der Dämpfer ist hier mit 34 gekennzeichnet. In einem weiteren Schritt 40 erfolgt eine erneute Aufspannung auf Rollen 44, wobei die Oberware 2 durch einen Behälter 41 geführt wird, in dem Natronlauge und Hydrosulfit oder Zucker und ein Dispergator oder ein Waschmittel mit Tensiden enthalten ist. Hier wird das Verdickungsmittel ausgespült und es werden unfixierte Farbstoffe ausgespült. Dadurch wird die Abriebfestigkeit weiter verbessert. In derselben Aufspannung der Oberware 2 erfolgt in einem Schritt 42 noch ein Trocknen auf Spannrahmen. In einem abschließenden Schritt 50 erfolgt ein Laminieren der Oberware 2 mit der Unterware und dem Schaum oder Schaumstoff zu dem bedruckten Textil. Dieses wird danach zugeschnitten und so für die einzelnen Anwendungen in die richtige Größe gebracht. Aus dem Textil können beispielsweise dann Sitzbezüge für Fahrzeugsitze oder Innenverkleidungen für Kraftfahrzeuge hergestellt werden.

### Bezugszahlenliste

- 1: Schritt 1
- 2: Oberware
- 3: Rollen
- 4: Behälter
- 5: Spannrahmen
- 8: Schritt 8
- 9: Block
- 10: Schritt 10
- 11: Behälter
- 12: Walzen
- 14: Flüssigkeit
- 20: Schritt 20
- 21: Schritt 21
- 22: Block
- 23: Rollen
- 30: Schritt 30
- 33: Rollen
- 34: Dämpfer
- 40: Schritt 40
- 41: Behälter
- 42: Schritt 42
- 44: Rollen
- 50: Schritt 50

## Patentansprüche

1. Verfahren zum Herstellen von bedruckten Textilien für Kraftfahrzeuge, wobei die Textilien eine polyesterbasierte Oberware (2) und eine Unterware aufweisen und bei dem
in die Oberware (2) in einem Foulard-Prozess mindestens ein Verdicker und ein UV-Absorber eingebracht werden,
die Oberware (2) getrocknet wird,
auf der getrockneten Oberware (2) der digitale Druckprozess durchgeführt wird,
und die bedruckte Oberware (2) mit der Unterware laminiert wird,
**dadurch gekennzeichnet,**
**dass** im Druckprozess bei Zugabe der farbigen Tinte farblose Tinte auf die Oberware (2) gegeben wird,
**dass** die farblose Tinte gleichzeitig mit der farbigen Tinte mit einem separaten Druckkopf aufgebracht wird.

2. Verfahren nach Anspruch 1, **dadurch gekennzeichnet, dass** in dem Foulard-Prozess ein Hydrophilierungsmittel in die Oberware (2) eingebracht wird.

3. Verfahren nach Anspruch 1 oder 2, **dadurch gekennzeichnet, dass** vor Durchführung des Druckprozesses eine Corona- oder Plasmabehandlung durchgeführt wird.

4. Verfahren nach einem der vorhergehenden Ansprüche, **dadurch gekennzeichnet, dass** vor Durchführung des Foulard-Prozesses die Oberware (2) einer Enzymbehandlung unterzogen wird.

5. Verfahren nach einem der vorhergehenden Ansprüche, **dadurch gekennzeichnet, dass** in dem Foulard-Prozess auch ein Entlüftungsmittel in die Oberware (2) eingebracht wird.

6. Verfahren nach einem der vorhergehenden Ansprüche, **dadurch gekennzeichnet, dass** in dem Foulard-Prozess auch ein Benetzungsmittel in die Oberware (2) eingebracht wird.

7. Verfahren nach einem der vorhergehenden Ansprüche, **dadurch gekennzeichnet, dass** das Druckverfahren mit Dispersionsfarben durchgeführt wird und unmittelbar anschließend eine Trocknung erfolgt.

8. Verfahren nach einem der vorhergehenden Ansprüche, **dadurch gekennzeichnet, dass** nach dem Druckprozess ein Fixierschritt erfolgt, bei dem die Tinte fixiert wird.

9. Verfahren nach einem der vorhergehenden Ansprüche, **dadurch gekennzeichnet, dass** nach dem Druckprozess und dem Fixierschritt die Oberware (2) gewaschen und getrocknet wird.

10. Verfahren nach einem der vorhergehenden Ansprüche, **dadurch gekennzeichnet, dass** die farblose Tinte die gleiche oder zumindest eine sehr ähnliche Viskosität wie die im Druckprozess zugegebene farbige Tinte aufweist.

11. Verfahren nach einem der vorhergehenden Ansprüche, **dadurch gekennzeichnet, dass** die farblose Tinte farblose Pigmente aufweist.

12. Verfahren nach einem der vorhergehenden Ansprüche, **dadurch gekennzeichnet, dass** für einige helle Farbtöne mindestens dieselbe Menge farbloser Tinte wie farbige Tinte, vorzugsweise mehr als zweimal oder mehr als dreimal soviel farblose Tinte wie farbige Tinte, aufgebracht wird.

13. Verfahren nach einem der vorhergehenden Ansprüche, **dadurch gekennzeichnet, dass** über alle Farben hinweg der Anteil farbloser Tinte gegenüber farbiger Tinte mindestens 20 % und höchstens 50 %, insbesondere 30 % bis 40 %, beträgt.

## Claims

1. A method for producing printed textiles for motor vehicles, wherein the textiles have a polyester-based top material (2) and a bottom material, and in which method
at least one thickener and a UV absorber are introduced into the top material (2) in a foulard process,
the top material (2) is dried,
the digital printing process is performed on the dried top material (2),
and the printed top material (2) is laminated with the bottom material,
**characterised in that**
colourless ink is applied to the top material (2) in the printing process when the coloured ink is applied, and
**in that** the colourless ink is applied simultaneously with the coloured ink by means of a separate print head.

2. The method according to claim 1, **characterised in that** a hydrophilising agent is introduced into the top material (2) in the foulard process.

3. The method according to claim 1 or 2, **characterised in that** a corona or plasma treatment is carried out prior to carrying out the printing process.

4. The method according to any one of the preceding claims, **characterised in that** the top material (2) is subjected to an enzyme treatment prior to carrying out the foulard process.

5. The method according to any one of the preceding claims, **characterised in that** in the foulard process a deaerating agent is also introduced into the top material (2).

6. The method according to any one of the preceding claims, **characterised in that** in the foulard process a wetting agent is also introduced into the top material (2) .

7. The method according to any one of the preceding claims, **characterised in that** the printing method is carried out using dispersion dyes and a drying takes place immediately thereafter.

8. The method according to any one of the preceding claims, **characterised in that** a fixing step, in which the dye is fixed, is carried out after the printing process.

9. The method according to any one of the preceding claims, **characterised in that** the top material (2) is washed and dried after the printing process and the fixing step.

10. The method according to any one of the preceding claims, **characterised in that** the colourless ink has the same viscosity as, or at least a very similar viscosity to the coloured ink added in the printing process.

11. The method according to any one of the preceding claims, **characterised in that** the colourless ink comprises colourless pigments.

12. The method according to any one of the preceding claims, **characterised in that** at least the same amount of colourless ink as coloured ink, preferably more than twice or more than three times as much colourless ink as coloured ink, is applied for some light colour shades.

13. The method according to any one of the preceding claims, **characterised in that**, across all dyes, the proportion of colourless ink relative to coloured ink is at least 20% and at most 50%, in particular 30% to 40%.

## Revendications

1. Procédé, destiné à fabriquer des textiles imprimés pour des véhicules automobiles, les textiles comportant une matière supérieure (2) à base de polyester et une matière inférieure et lors duquel lors d'un procédé foulard, on introduit dans la matière supérieure (2) un épaississant et un absorbeur d'UV,
on fait sécher la matière supérieure (2),
sur la matière supérieure (2) séchée, on procède au processus d'impression numérique,
et on lamine la matière supérieure (2) imprimée avec la matière inférieure,
**caractérisé**
**en ce que** lors du processus d'impression, lors de l'ajout de l'encore colorée, on passe sur la matière supérieure (2) de l'encre incolore,
**en ce qu'**on applique l'encre incolore simultanément avec l'encore colorée avec une tête d'impression séparée.

2. Procédé selon la revendication 1, **caractérisé en ce que**, lors du procédé foulard, on introduit un agent d'hydrophilisation dans la matière supérieure (2).

3. Procédé selon la revendication 1 ou 2, **caractérisé en ce qu'**avant de procéder au processus d'impression, on réalise un traitement corona ou au plasma.

4. Procédé selon l'une quelconque des revendications précédentes, **caractérisé en ce qu'**avant de procéder au procédé foulard, on soumet la matière supérieure (2) à un traitement enzymatique.

5. Procédé selon l'une quelconque des revendications précédentes, **caractérisé en ce que** lors du procédé foulard, on introduit un agent de désaération dans la matière supérieure (2).

6. Procédé selon l'une quelconque des revendications précédentes, **caractérisé en ce que** lors du procédé foulard, on introduit un agent mouillant dans la matière supérieure (2).

7. Procédé selon l'une quelconque des revendications précédentes, **caractérisé en ce que** le procédé d'impression est réalisé avec des peintures à dispersion et **en ce que** directement dans la suite a lieu un séchage.

8. Procédé selon l'une quelconque des revendications précédentes, **caractérisé en ce qu'**après le processus d'impression a lieu une étape de fixation, lors de laquelle on fixe l'encre.

9. Procédé selon l'une quelconque des revendications précédentes, **caractérisé en ce qu'**après le processus d'impression et l'étape de fixation, on lave et on fait sécher la matière supérieure (2).

10. Procédé selon l'une quelconque des revendications précédentes, **caractérisé en ce que** l'encre incolore fait preuve d'une viscosité identique ou pour le moins très analogue à celle de l'encre colorée ajoutée lors du processus d'impression.

11. Procédé selon l'une quelconque des revendications précédentes, **caractérisé en ce que** l'encore incolore comporte des pigments incolores.

12. Procédé selon l'une quelconque des revendications précédentes, **caractérisé en ce que** pour certaines teintes claires, on applique au moins une quantité égale d'encre incolore que d'encre colorée, de préférence plus de deux fois ou plus de trois fois plus d'encre incolore que d'encre colorée.

13. Procédé selon l'une quelconque des revendications précédentes, **caractérisé en ce que** pour toutes les couleurs, la part d'encre incolore s'élève à au moins 20 % et à au plus 50 %, notamment à de 30 % à 40 %, par rapport à l'encre colorée.
